# EUROPÄISCHE PATENTANMELDUNG

(11) **EP 3 252 937 A1**
(43) Veröffentlichungstag der Anmeldung: **06.12.2017**
(21) Anmeldenummer: 16172884.5
(22) Anmeldetag: 03.06.2016
(51) Int. Cl.: H02M 1/10, H02J 3/00, H02J 3/38, H02M 7/5387

(54) **WECHSELRICHTER UND VERFAHREN ZUM BETREIBEN EINES WECHSELRICHTERS**

(71) Anmelder: Fronius International GmbH, 4643 Pettenbach (AT)
(72) Erfinder: LUGER, Andreas, 4616 Weißkirchen an der Traun (AT); REITER, Gerhard, 4663 Laakirchen (AT); DOPPELBAUER, Bernhard, 4631 Krenglbach (AT); STAUDINGER, Bernhard, 4596 Steinbach an der Steyr (AT)
(74) Vertreter: Sonn & Partner Patentanwälte

(57) **Zusammenfassung**

Zusammenfassung:
Die Erfindung betrifft einen Wechselrichter (1) zur Umwandlung einer Gleichspannung (U_{DC}) einer Gleichspannungsquelle (2) in eine Wechselspannung (U_{AC}) zur Einspeisung in ein Einphasen-Dreileiternetz (3) und zum Versorgen von Verbrauchern (4), mit einem DC-Eingang (5) zur Verbindung mit der Gleichspannungsquelle (2), einem Zwischenkreis (6) mit einem Zwischenkreismittelpunkt (7), einem DC/AC-Wandler (8), einer Steuereinrichtung (9) und einem AC-Ausgang (10) mit zwei oder mehr Außenleitern (L1, L2) und einem Neutralleiter (N) zur Verbindung mit dem Einphasen-Dreileiternetz (3) und den Verbrauchern (4), wobei der DC/AC-Wandler (8) zumindest zwei Halbbrücken (12, 13) aufweist, welche Halbbrücken (12, 13) in einem Normalbetrieb (NOM) ausgangsseitig parallel geschaltet und mit einem der Außenleiter (L1, L2) des AC-Ausgangs (10) verbunden sind und der Zwischenkreismittelpunkt (7) mit einem der anderen Außenleitern (L1, L2) des AC-Ausgangs (10) verbunden ist, sowie ein Verfahren zum Betreiben eines solchen Wechselrichters (1). Erfindungsgemäß ist die Steuereinrichtung (9) dazu ausgebildet, in einem Notstrombetrieb (BOM) eine Halbbrücke (12) des DC/AC-Wandlers (8) mit einem Außenleiter (L1) des AC-Ausgangs (10), die andere Halbbrücke (13) des DC/AC-Wandlers (8) mit einem anderen Außenleiter (L2) des AC-Ausgangs (10) und den Zwischenkreismittelpunkt (7) mit dem Neutralleiter (N) des AC-Ausgangs (10) zu verbinden und die Amplitude des Ausgangssignals (U1_{BOM}, U2_{BOM}) der Halbbrücken (12, 13) zu halbieren, sodass zumindest einige Verbraucher (4) auch im Notstrombetrieb (BOM) versorgbar sind.

## Beschreibung

Die Erfindung betrifft einen Wechselrichter zur Umwandlung einer Gleichspannung einer Gleichspannungsquelle in eine Wechselspannung zur Einspeisung in ein Einphasen-Dreileiternetz und zum Versorgen von Verbrauchern, mit einem DC-Eingang zur Verbindung mit der Gleichspannungsquelle, einem Zwischenkreis mit einem Zwischenkreismittelpunkt, einem DC/AC-Wandler, einer Steuereinrichtung und einem AC-Ausgang mit zwei oder mehr Außenleitern und einem Neutralleiter zur Verbindung mit dem Einphasen-Dreileiternetz und den Verbrauchern, wobei der DC/AC-Wandler zumindest zwei Halbbrücken aufweist, welche Halbbrücken in einem Normalbetrieb ausgangsseitig parallel geschaltet und mit einem der Außenleiter des AC-Ausgangs verbunden sind und der Zwischenkreismittelpunkt mit einem der anderen Außenleiter des AC-Ausgangs verbunden ist.

Weiters betrifft die Erfindung ein Verfahren zum Betreiben eines Wechselrichters zur Umwandlung einer Gleichspannung einer Gleichspannungsquelle in eine Wechselspannung zur Einspeisung in ein Einphasen-Dreileiternetz und zum Versorgen von Verbrauchern, mit einem DC-Eingang zur Verbindung mit der Gleichspannungsquelle, einem Zwischenkreis mit einem Zwischenkreismittelpunkt, einem DC/AC-Wandler, einer Steuereinrichtung und einem AC-Ausgang mit zwei oder mehr Außenleitern und einem Neutralleiter zur Verbindung mit dem Einphasen-Dreileiternetz und den Verbrauchern, wobei der DC/AC-Wandler zumindest zwei Halbbrücken aufweist, welche Halbbrücken in einem Normalbetrieb ausgangsseitig parallel geschaltet und mit einem der Außenleiter des AC-Ausgangs verbunden werden und der Zwischenkreismittelpunkt mit einem anderen Außenleiter verbunden wird.

Wechselrichter dienen dazu, die Gleichspannung einer Energiequelle, beispielsweise von Photovoltaikmodulen, in eine sinusförmige Wechselspannung umzuwandeln, welche in ein Versorgungsnetz eingespeist oder auch direkt zur Versorgung von Verbrauchern verwendet werden kann. Um möglichst hohe Leistung mit möglichst geringem Strom einspeisen zu können, wird ein Wechselrichter üblicherweise mit den Außenleitern bzw. Phasen des Versorgungsnetzes verbunden. Insbesondere bei Einphasen-Dreileiternetzen, im nordamerikanischen Raum auch als Split-Phase-Netz bezeichnet, welche drei Leiter (zwei Außenleitern und den Neutralleiter) aufweisen, tritt bei der Versorgung der Verbraucher bei Netzausfall das Problem auf, dass aufgrund des an den Außenleitern angeschlossenen Wechselrichters ein Transformator mit Mittelanzapfung an der Sekundärseite oder zumindest ein Spartransformator verwendet werden muss, weil ein Großteil der Verbraucher zwischen einem der Außenleiter und dem Neutralleiter angeschlossen ist. Ein derartiger Transformator ist relativ teuer, weshalb nach Möglichkeiten ohne die Verwendung eines solchen Transformators gesucht wird.

Die vorliegende Erfindung ist insbesondere für Versorgungsnetze in Form von Einphasen-Dreileiternetzen gedacht und kann auch bei Einphasen-Dreileiternetzen mit Dreiphasenerweiterung, die im nordamerikanischen Raum als Delta 4-Wire, High Leg Delta oder auch Red-Leg Delta System bezeichnet wird, zur Anwendung kommen.

Eine mögliche Lösung ohne Transformator wäre die parallele Verwendung zweier oder mehrerer Wechselrichter für jeweils einen Außenleiter des Versorgungsnetzes. Eine derartige Lösung scheidet aufgrund des hohen Aufwandes und der hohen Kosten meist aus.

Die Aufgabe der vorliegenden Erfindung besteht darin, einen oben genannten Wechselrichter und ein Verfahren zum Betreiben eines solchen Wechselrichters zu schaffen, mit welchem auch beim Ausfall des Versorgungsnetzes (Einphasen-Dreileiternetzes) eine Energieversorgung zumindest einiger Verbraucher gewährleistet werden kann, ohne dass ein Transformator eingesetzt wird. Die Nachteile derartiger bekannter Vorrichtungen und Verfahren unter Anwendung eines Transformators sollen somit vermieden oder zumindest reduziert werden.

Gelöst wird die erfindungsgemäße Aufgabe durch einen oben genannten Wechselrichter, bei dem die Steuereinrichtung dazu ausgebildet ist, in einem Notstrombetrieb eine Halbbrücke des DC/AC-Wandlers mit einem Außenleiter des AC-Ausgangs, die andere Halbbrücke des DC/AC-Wandlers mit einem anderen Außenleiter des AC-Ausgangs und den Zwischenkreismittelpunkt mit dem Neutralleiter des AC-Ausgangs zu verbinden und die Amplitude des Ausgangssignals der Halbbrücken zu halbieren, sodass zumindest einige zwischen Neutralleiter und Außenleiter angeschlossene Verbraucher auch im Notstrombetrieb versorgbar sind. Der erfindungsgemäße Wechselrichter mit den speziell verschalteten Halbbrücken des DC/AC-Wandlers gewährleistet somit im Normalbetrieb mit den beiden ausgangsseitig parallel geschalteten Halbbrücken die Einspeisung der Energie an die Außenleiter des Einphasen-Dreileiternetzes, während im Notstrombetrieb die Halbbrücken entsprechend umgeschaltet und die Amplitude des Ausgangssignals der Halbbrücken halbiert wird, um eine Versorgung zumindest einiger zwischen Neutralleiter und Außenleiter angeschlossener Verbraucher auch bei einem Ausfall des Einphasen-Dreileiternetzes zu gewährleisten. Im Notstrombetrieb speisen somit die beiden Halbbrücken des DC/AC-Wandlers jeweils zwischen einem Außenleiter und dem Neutralleiter ein und die Amplitude des Ausgangssignals der Halbbrücken gegenüber dem Ausgangssignal im Normalbetrieb halbiert, sodass zumindest jene Verbraucher, die auch im Notstrombetrieb zwischen Neutralleiter und Außenleiter am AC-Ausgang des Wechselrichters angeschlossen sind, mit Energie versorgt werden können. Im Gegensatz zum Stand der Technik ist kein zusätzlicher Transformator mit Mittelanzapfung an der Sekundärseite notwendig, sondern es werden lediglich entsprechende Schalter zum Umschalten der Halbbrücken und die Einrichtung zur Halbierung des Ausgangssignals der Halbbrücken benötigt. Eine derartige Schaltung zeichnet sich durch besonders geringen Aufwand und somit geringe Kosten aus. Durch die Halbierung der Ausgangsspannung und Aufteilung des Stromes auf die beiden Halbbrücken kann im Notstrombetrieb höchsten die Hälfte der maximalen Leistung des Normalbetriebs an die jeweiligen Verbraucher geliefert werden. Es kann also zwischen dem Normalbetrieb und dem Notstrombetrieb umgeschaltet werden. Die Steuerung der Umschaltung der Halbbrücken vom Normalbetrieb in den Notstrombetrieb und umgekehrt, wie auch die Halbierung des Ausgangssignals können idealerweise über entsprechende Mikrocontroller relativ kostengünstig durchgeführt werden.

Der Wechselrichter kann weiter verbessert werden, wenn die Steuereinrichtung dazu ausgebildet ist, in dem Notstrombetrieb eine Phasenverschiebung des Ausgangssignals einer Halbbrücke um 180° durchzuführen. Ist das Ausgangssignal der zweiten Halbbrücke um 180° phasenverschoben, können nicht nur zwischen Neutralleiter und Außenleiter angeschlossene Verbraucher im Notstrombetrieb weiter versorgt werden, sondern auch Verbrauchern, die zwischen Außenleiter-Außenleiter angeschlossen sind, steht die notwendige Versorgungsspannung zur Verfügung. Die Differenzspannung der beiden Halbbrücken beträgt durch die Phasenverschiebung des Ausgangssignals einer Halbbrücke um 180° nämlich die doppelte Außenleiter-Neutralleiter-Spannung, was bei einem Einphasen-Dreileiternetz der Außenleiter-Außenleiter Spannung entspricht und kann somit zur Versorgung von zwischen Außenleiter-Außenleiter angeschlossenen Verbrauchern genutzt werden. Diese Ausgestaltung des Wechselrichters erlaubt, im Notstrombetrieb alle Verbraucher, die zumindest auch im Notstrombetrieb am AC-Ausgang des Wechselrichters angeschlossen sind zu versorgen.

Eine andere vorteilhafte Ausgestaltung des Wechselrichters ergibt sich, wenn die Steuereinrichtung dazu ausgebildet ist, in dem Notstrombetrieb zumindest zwei der Außenleiter des AC-Ausgangs miteinander zu verbinden. Dies erlaubt die Versorgung von zwischen Neutralleiter und Außenleiter angeschlossenen Verbrauchern und führt gleichzeitig zu einer gleichmäßigen Aufteilung des Ausgangsstroms auf die Halbbrücken. Die aus dem Normalbetrieb vorgegebene, meist nicht gleichmäßige Aufteilung der Verbraucher auf unterschiedliche Außenleiter, kann durch die Verbindung der Außenleiter aufgehoben werden. Die Verbindung der Außenleiter bewirkt zugleich eine Parallelschaltung der auf unterschiedlichen Außenleitern einspeisenden Halbbrücken, wodurch eine gleichmäßige Stromaufteilung erreicht werden kann. Die Verbindung der Außenleiter kann beispielsweise durch ein Relais innerhalb oder außerhalb des Wechselrichters bewirkt werden. Aufgrund der gleichmäßigen Stromaufteilung auf die Halbbrücken, kann der Wechselrichter bis zum maximalen Strom aller Halbbrücken belastet werden, wodurch mehr Verbraucher oder Verbraucher mit einem höheren Leistungsbedarf im Notstrombetrieb versorgt werden können.

Vorzugsweise ist ein AC-Trenner vorgesehen, welcher zwischen ausgewählten Verbrauchern und übrigen Verbrauchern angeordnet ist, und die Steuereinrichtung dazu ausgebildet, den AC-Trenner anzusteuern, sodass im Notstrombetrieb der AC-Ausgang mit den ausgewählten Verbrauchern verbunden ist, während die Verbindung mit den übrigen Verbrauchern und dem Einphasen-Dreileiternetz aufgetrennt ist. Durch einen solchen AC-Trenner, der im Wechselrichter integriert oder auch extern angeordnet sein kann, wird im Falle des Notstrombetriebs das Einphasen-Dreileiternetz vom AC-Ausgang des Wechselrichters getrennt und eine Auswahl zwischen den Verbrauchern getroffen, und zwar in ausgewählte Verbraucher, welche auch im Notstrombetrieb mit elektrischer Energie versorgt werden sollen, und übrige Verbraucher, welche während des Notstrombetriebs nicht mit elektrischer Energie versorgt werden müssen. Beispielsweise kann ein Kühlschrank oder eine Alarmanlage als Verbraucher ausgewählt werden, der auch bei einem Ausfall des Einphasen-Dreileiternetzes im Notstrombetrieb mit elektrischer Energie versorgt werden soll, wohingegen einzelne Beleuchtungskörper oder elektrische Geräte, deren Verwendung nicht häufig geplant ist, als übrige Verbraucher angesehen werden, die nur im Normalbetrieb mit elektrischer Energie versorgt werden müssen, auf deren Funktion während eines Notstrombetriebs jedoch verzichtet werden kann.

In einer einfachsten Ausführungsvariante kann ein Schalter zum manuellen Umschalten zwischen dem Normalbetrieb und dem Notstrombetrieb vorgesehen sein. In einem solchen Fall muss der Benutzer bei Erkennen des Ausfalls des Einphasen-Dreileiternetzes aktiv werden und mithilfe des mechanischen Schalters den Wechselrichter manuell in den Notstrombetrieb umschalten, sodass zumindest einige Verbraucher, insbesondere die ausgewählten Verbraucher, im Notstrombetrieb mit Energie versorgt werden können. Die Verwendung eines externen Steuersignals anstelle des manuellen Schalters ist auch vorstellbar und kann sich in bestimmten Netzkonfigurationen auszeichnen.

Weiters kann eine Messeinrichtung zur Erfassung von Netzparametern des Einphasen-Dreileiternetzes vorgesehen sein, welche mit der Steuereinrichtung verbunden ist, sodass die Abweichung eines Netzparameters des Einphasen-Dreileiternetzes von einem vorgegebenen Wert an einer Anzeige anzeigbar ist. Durch eine derartige Erfassung zumindest eines Netzparameters des Versorgungsnetzes kann dem Benutzer der Ausfall des Versorgungsnetzes entsprechend zur Kenntnis gebracht werden. Der oder die zu erfassenden Netzparameter können beispielsweise Spannung, Frequenz oder auch die Erkennung einer Inselbildung sein. Die Anzeige kann dabei sowohl optisch, akustisch oder auch mechanisch, beispielsweise über entsprechende Vibrationen, mitgeteilt werden. Danach kann der Benutzer entscheiden, ob er den Wechselrichter in den Notstrombetrieb umschalten wird.

In diesem Fall kann die Steuereinrichtung zur automatischen Umschaltung in dem Notstrombetrieb im Falle der Abweichung zumindest eines Netzparameters des Versorgungsnetzes von einem vorgegebenen Wert ausgebildet sein. Sollte beispielsweise die aktuelle Netzfrequenz ein vorgegebenes Frequenzband verlassen, kann dies die automatische Umschaltung in den Notstrombetrieb veranlassen. Die Umschaltung kann auch bei Abweichung anderer Netzparameter, wie Spannung oder bei Erkennung einer Inselbildung, veranlasst werden. Dabei können auch nationale Richtlinien und Vorschriften berücksichtigt werden, die das Wegschalten des Wechselrichters vom Versorgungsnetz erst nach einer bestimmten Zeitspanne gestatten. Somit kann auch ohne Zutun des Benutzers eine Umschaltung in den Notstrombetrieb erfolgen und eine Versorgung zumindest einiger Verbraucher bei Ausfall des Einphasen-Dreileiternetzes gewährleistet werden.

Zur Umschaltung der Halbbrücken zwischen dem Normalbetrieb und dem Notstrombetrieb können Relais vorgesehen sein, welche mit der Steuereinrichtung verbunden sind. Dies stellt eine einfache und kostengünstige Realisierungsmöglichkeit dar. Die Kontakte der Relais werden an den entsprechenden Stellen zwischen den Halbbrücken des DC/AC-Wandlers des Wechselrichters und dem AC-Ausgang vorgesehen und die Betätigung der Relais über die Steuereinrichtung gesteuert. Bei entsprechender Wahl bzw. Verschaltung der Relais können diese außerdem auch zur vollständigen Trennung des DC/AC-Wandlers vom AC-Ausgang verwendet werden.

Die Halbbrücken des DC/AC-Wandlers des Wechselrichters beinhalten vorzugsweise Halbleiterschalter, insbesondere IGBTs (insulated-gate bipolar transistors). Diese Transistorart wird vorzugsweise in der Leistungselektronik verwendet und verfügt über gutes Durchlassverhalten, hohe Sperrspannung, gute Robustheit gegenüber Kurzschlüssen und ist relativ kostengünstig erhältlich.

Die Gleichspannungsquelle des Wechselrichters kann durch Batterien und bzw. oder Photovoltaikmodule gebildet sein. Neben diesen auch kombinierbaren Möglichkeiten einer Gleichspannungsquelle kommen natürlich auch andere Quellen, wie zum Beispiel Generatoren, beispielsweise Windgeneratoren, deren Wechselspannung gleichgerichtet wird, in Frage.

Ebenso wir die erfindungsgemäße Aufgabe durch ein oben beschriebenes Verfahren zum Betreiben eines Wechselrichters gelöst, bei dem durch die Steuereinrichtung in einem Notstrombetrieb eine Halbbrücke des DC/AC-Wandlers mit einem Außenleiter des AC-Ausgangs und die andere Halbbrücke des DC/AC-Wandlers mit einem anderen Außenleiter des AC-Ausgangs und der Zwischenkreismittelpunkt mit dem Neutralleiter des AC-Ausgangs verbunden wird, und die Amplitude des Ausgangssignals der Halbbrücken halbiert wird, sodass zumindest einige Verbraucher auch im Notstrombetrieb versorgt werden. Zu den damit erzielbaren Vorteilen wird auf die obige Beschreibung des Wechselrichters verwiesen.

Das Verfahren kann verbessert werden, wenn durch die Steuereinrichtung in dem Notstrombetrieb eine Phasenverschiebung des Ausgangssignals einer Halbbrücke um 180° durchgeführt wird. So können auch Verbraucher, die zu ihrer Versorgung die Außenleiter-Außenleiter-Spannung benötigen, im Notstrombetrieb weitere versorgt werden.

In einer anderen Ausgestaltung des Verfahrens können durch die Steuereinrichtung in dem Notstrombetrieb zumindest zwei der Außenleiter des AC-Ausgangs miteinander verbunden werden. Eine gleichmäßige Stromaufteilung auf beide Halbbrücken kann so auch im Notstrombetrieb erreicht werden.

Gemäß einem Merkmal der Erfindung wird ein AC-Trenner zwischen ausgewählten Verbrauchern und übrigen Verbrauchern angeordnet, und der AC-Trenner durch die Steuereinrichtung so angesteuert, dass im Notstrombetrieb der AC-Ausgang mit den ausgewählten Verbrauchern verbunden wird, während die Verbindung mit den übrigen Verbrauchern und dem Einphasen-Dreileiternetz aufgetrennt wird. Auf diese Weise können im Notstrombetrieb das Einphasen-Dreileiternetz und die nicht notwendigerweise zu versorgenden, übrigen Verbraucher vom Wechselrichterausgang getrennt werden.

Die Halbbrücken des DC/AC-Wandlers und allenfalls der AC-Trenner können manuell mit einem Schalter in den Notstrombetrieb umgeschaltet werden.

Vorteilhafterweise werden Netzparameter des Einphasen-Dreileiternetzes erfasst und die Abweichung eines Netzparameters des Einphasen-Dreileiternetzes von einem vorgegebenen Wert angezeigt.

Im Falle der Erfassung von Netzparameter des Einphasen-Dreileiternetzes kann bei einer Abweichung zumindest eines Netzparameters des Einphasen-Dreileiternetzes vom vorgegebenen Wert die Steuereinrichtung auch zum automatischen Umschalten in den Notstrombetrieb veranlasst werden.

Die Ausgänge der Halbbrücken und der Zwischenkreismittelpunkt können zwischen dem Normalbetrieb und dem Notstrombetrieb über mit der Steuereinrichtung verbundene Relais umgeschaltet werden, sodass der AC-Ausgang des Wechselrichters entsprechend dem aktuellen Betriebszustand, Normalbetrieb oder Notstrombetrieb, mit den Ausgängen der Halbbrücken und dem Zwischenkreismittelpunkt verbunden ist.

Wie bereits oben erwähnt, kann die Gleichspannungsquelle durch Batterien und bzw. oder Photovoltaikmodule gebildet werden.

Die Erfindung wird anhand der beigefügten Zeichnungen näher erläutert. Darin zeigen:
- Fig. 1: eine schematische Übersichtsdarstellung eines Wechselrichters;
- Fig. 2a: eine Ausführungsform des erfindungsgemäßen Wechselrichters im Normalbetrieb;
- Fig. 2b: die zeitlichen Verläufe der Ausgangsspannungen der Halbbrücken des DC/AC-Wandlers des Wechselrichters im Normalbetrieb;
- Fig. 3a: der erfindungsgemäße Wechselrichter gemäß Fig. 2a in einer ersten Variante des Notstrombetriebs;
- Fig. 3b: die zeitlichen Verläufe der Ausgangsspannungen der Halbbrücken des DC/AC-Wandlers des Wechselrichters in der ersten Variante des Notstrombetriebs;
- Fig. 4a: der erfindungsgemäße Wechselrichter gemäß Fig. 2a in einer zweiten Variante des Notstrombetriebs; und
- Fig. 4b: die zeitlichen Verläufe der Ausgangsspannungen der Halbbrücken des DC/AC-Wandlers des Wechselrichters in der zweiten Variante des Notstrombetriebs.

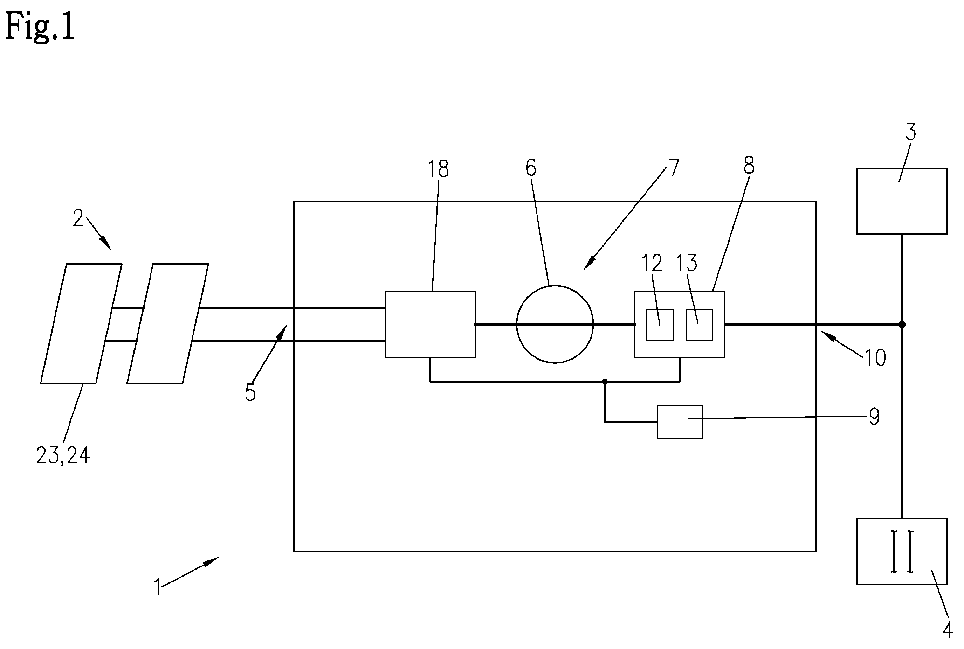

Fig. 1 zeigt eine schematische Übersichtsdarstellung eines Wechselrichters 1. Der Wechselrichter 1 wird an seinem DC-Eingang 5 mit einer entsprechenden Gleichspannungsquelle 2, beispielsweise einer Batterie 23 oder Photovoltaikmodulen 24, verbunden. Nach einem nicht näher beschriebenen DC/DC-Wandler 18 ist ein Zwischenkreis 6 mit einem Zwischenkreismittelpunkt 7 angeordnet und mit dem DC/AC-Wandler 8 verbunden. Über eine Steuereinrichtung 9 werden die Komponenten des Wechselrichters 1 entsprechend gesteuert. Der Ausgang des DC/AC-Wandlers 8 ist mit dem AC-Ausgang 10 des Wechselrichters 1 verbunden, der wiederum mit dem Einphasen-Dreileiternetz 3 oder Verbrauchern 4 verbunden wird. Besonders Auszeichnen kann sich die Erfindung im Zusammenspiel mit einem Einphasen-Dreileiternetzes oder auch einem Einphasen-Dreileiternetz mit Dreiphasenerweiterung. Mit der Steuereinrichtung 9 des Wechselrichters 1, welche vorzugsweise durch einen Mikroprozessor, Mikrocontroller oder Rechner gebildet wird, können bestimmte Bedienungselemente und Schnittstellen verbunden sein, über welche eine Bedienung des Wechselrichters 1 oder die Durchführung eines Software-Updates der Steuereinrichtung 9 vorgenommen werden kann (nicht dargestellt).

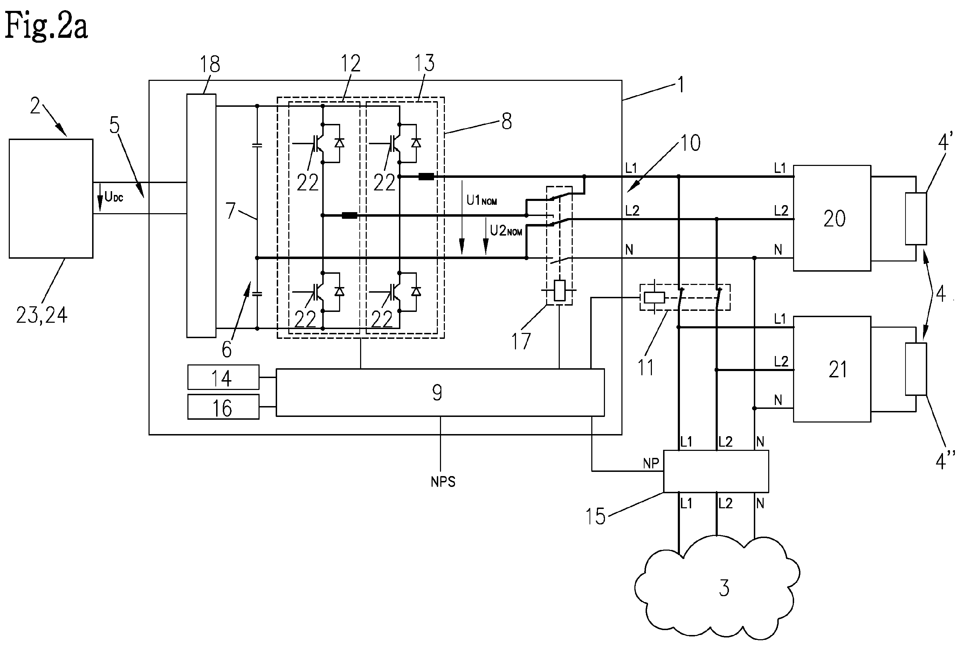

In Fig. 2a ist eine Ausführungsform des erfindungsgemäßen Wechselrichters 1 im Normalbetrieb NOM dargestellt. Aus der Darstellung ist der Wechselrichter 1 ersichtlich, an dessen DC-Eingang 5 die Gleichspannungsquelle 2, beispielsweise Batterie 23 oder Photovoltaikmodule 24, angeschlossen ist. Der DC/AC-Wandler 8 des Wechselrichters 1 beinhaltet die beiden Halbbrücken 12, 13 mit den entsprechenden Halbleiterschaltern 22. Am AC-Ausgang 10 des Wechselrichters 1 werden über einen AC-Trenner 11 das Einphasen-Dreileiternetz 3 und die übrigen Verbraucher 4", welche im Notstrombetrieb BOM nicht mit Energie versorgt werden müssen, angeschlossen. Der Anschluss der übrigen Verbraucher 4" erfolgt üblicherweise mittels eines Hauptanschlusspaneels 21. Über ein sogenanntes Notstromanschlusspaneel 20 werden die ausgewählten Verbraucher 4', welche auch im Notstrombetrieb BOM mit elektrischer Energie versorgt werden sollen, angeschlossen. In der Darstellung sind die Kontakte des Relais 17 zum Umschalten der Halbbrücken 12, 13 des AC/DC-Wandlers im Normalbetrieb NOM eingezeichnet. Dementsprechend sind die beiden Halbbrücken 12, 13 am Ausgang parallel geschaltet, womit die Ausgänge der Halbbrücken 12, 13 mit dem Außenleiter L1 und der Zwischenkreismittelpunkt 7 mit dem Außenleiter L2 des Einphasen-Dreileiternetzes 3 verbunden ist. Die Einspeisung erfolgt somit zwischen den Außenleitern L1 und L2 des Einphasen-Dreileiternetzes 3.

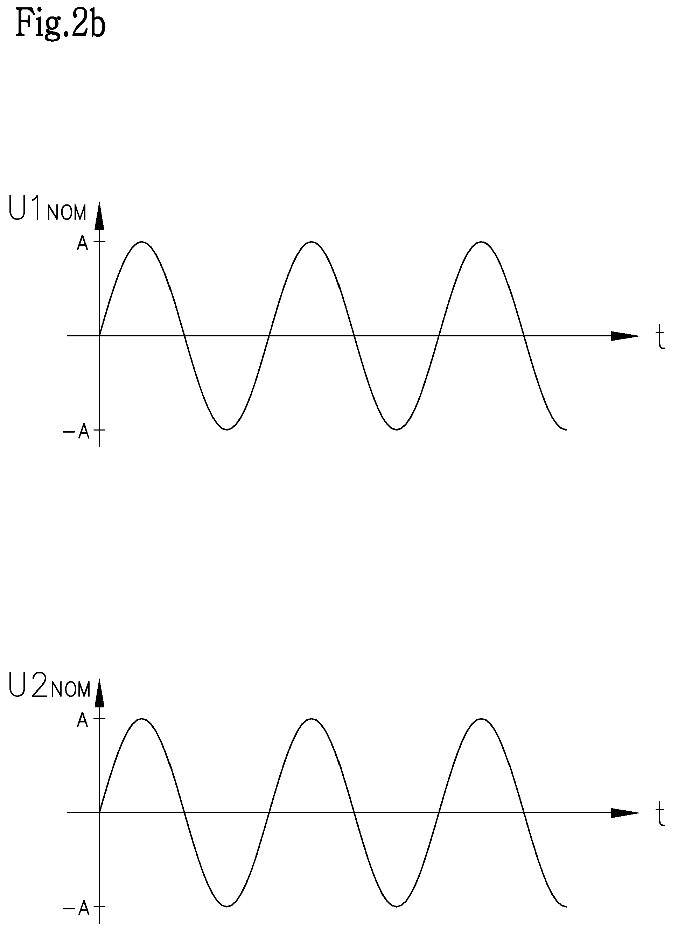

Fig. 2b zeigt die zeitlichen Verläufe der Ausgangsspannungen U1_{NOM}, U2_{NOM} der Halbbrücken 12, 13 des DC/AC-Wandlers 8 des Wechselrichters 1 im Normalbetrieb NOM. In diesen Diagrammen ist der Ausgangsspannungsverlauf U1_{NOM} der ersten Halbbrücke 12 des DC/AC-Wandlers 8, das ist jene Halbbrücke 12, welche mit dem Außenleiter L1 des Einphasen-Dreileiternetzes 3 verbunden wird, gegenüber dem Zwischenkreismittelpunkt 7 dargestellt. U2_{NOM} zeigt die Ausgangsspannung der zweiten Halbbrücke 13, welche auch mit dem Außenleiter L1 des Einphasen-Dreileiternetzes 3 verbunden ist. Da der Zwischenkreismittelpunkt mit dem Außenleiter L2 verbunden ist, werden die beiden Spannungssignale jeweils zwischen dem Außenleiter L1 und L2 eingespeist. Dementsprechend weisen beide Spannungsverläufe denselben Phasenverlauf und dieselbe Amplitude A auf. Da die Einspeiseleistung meist durch die Stromtragfähigkeit der Halbleiterschalter 22 begrenzt wird, kann im Normalbetrieb NOM durch die Einspeisung zwischen den Außenleitern L1 und L2 eine höhere Leistung vom Wechselrichter abgegeben werden verglichen mit einer Einspeisung zwischen Außenleiter L1 bzw. L2 und Neutralleiter N.

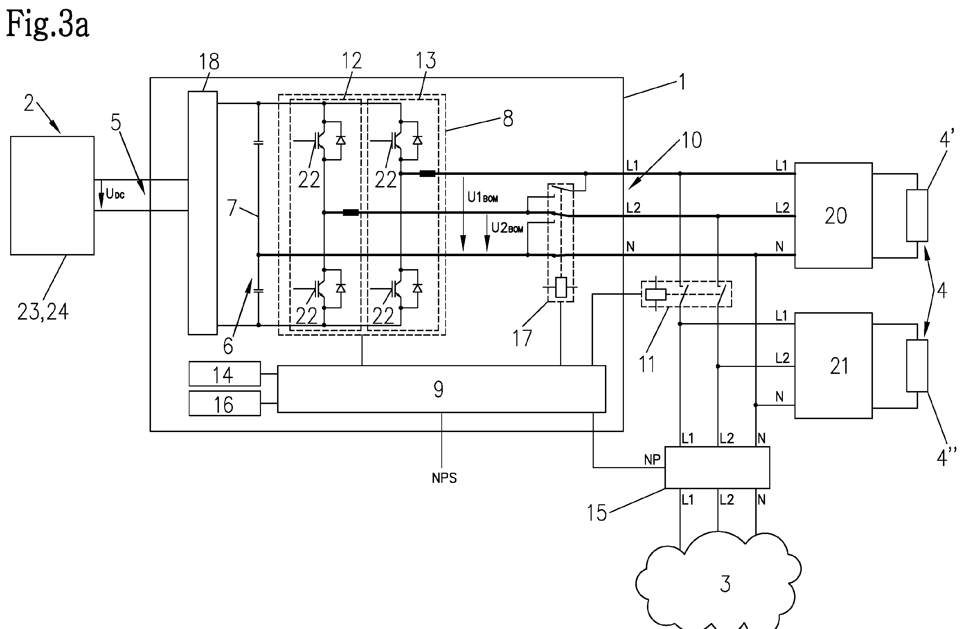

In Fig. 3a ist der Wechselrichter 1 gemäß Fig. 2a in einer ersten Variante des Notstrombetriebs BOM dargestellt. Gegenüber dem Normalbetrieb NOM gemäß Fig. 2a ist nun der AC-Trenner 11 entsprechend angesteuert worden, sodass das Einphasen-Dreileiternetz 3 und das Hauptanschlusspaneel 21 vom Wechselrichter 1 getrennt sind und nur die ausgewählten Verbraucher 4' über das Notstromanschlusspaneel 20 mit dem AC-Ausgang 10 des Wechselrichters 1 verbunden sind. Erfindungsgemäß wird im Notstrombetrieb BOM die eine Halbbrücke 12 des DC/AC-Wandlers 8 mit der einen Außenleiter L1 des AC-Ausgangs 10, die zweite Halbbrücke 13 des DC/AC-Wandlers mit dem anderen Außenleiter L2 des AC-Ausgangs 10 und der Zwischenkreismittelpunkt 7 des Wechselrichters mit dem Neutralleiter N des AC-Ausgangs 10 verbunden. Diese gegenüber dem Normalbetrieb NOM abgeänderte Verbindung der Halbbrücken 12, 13 mit dem AC-Ausgang 10 wird durch die Ansteuerung des Relais 17 bewirkt, was eine einfache und kostengünstige Realisierungsmöglichkeit darstellt. Die Ausgangssignale U1_{BOM}, U2_{BOM} der Halbbrücken 12, 13 sind in ihrer Amplitude gegenüber dem Normalbetrieb NOM halbiert. Darüber hinaus wird das Ausgangssignal U2_{BOM} der zweiten Halbbrücke 13 um 180° phasenverschoben, wodurch sowohl zwischen Außenleiter L1, L2 und Neutralleiter N sowie zwischen Außenleiter L1 und Außenleiter L2 angeschlossene, ausgewählte Verbraucher 4' eines Einphasen-Dreileiternetzes im Notstrombetrieb BOM versorgt werden.

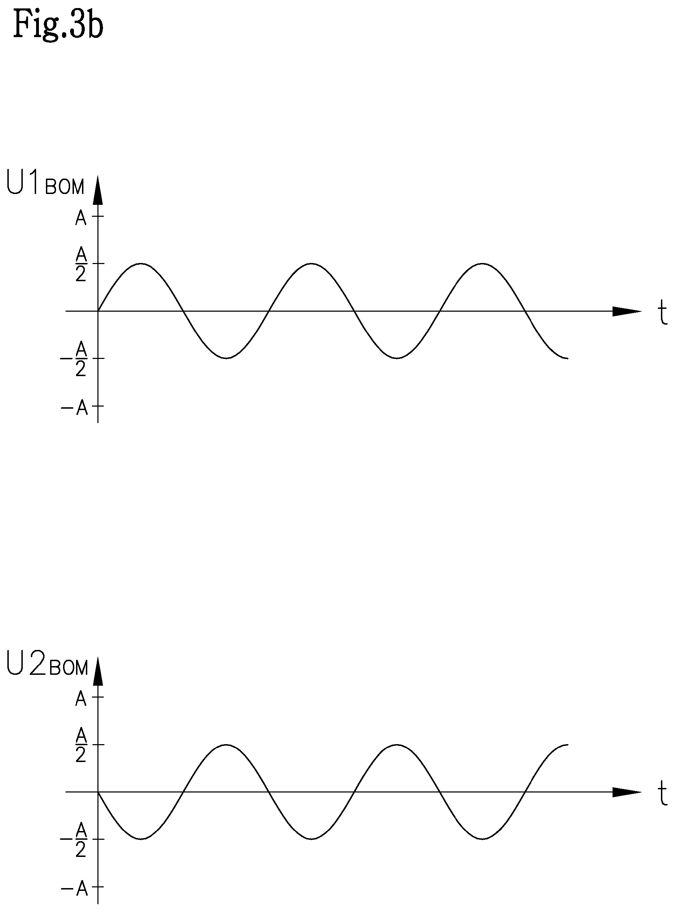

Fig. 3b zeigt die zeitlichen Verläufe der Ausgangsspannungen U1_{BOM}, U2_{BOM} der Halbbrücken 12, 13 des DC/AC-Wandlers 8 des Wechselrichters 1 in der ersten Variante des Notstrombetriebs BOM. Das obere Diagramm zeigt die Ausgangsspannung U1_{BOM} der ersten Halbbrücke 12 in Abhängigkeit der Zeit t, welche zwischen der Außenleiter L1 und dem Neutralleiter N, der mit dem Zwischenkreismittelpunkt 7 verbunden ist, eingespeist wird. Das Ausgangssignal U2_{BOM} der zweiten Halbbrücke 13 ist gegenüber dem Ausgangssignal U1_{BOM} der ersten Halbbrücke 12 um 180° phasenverschoben und wird zwischen der Außenleiter L2 und dem Neutralleiter N eingespeist. Die Amplitude A/2 der Ausgangssignale U1_{BOM}, U2_{BOM} ist gegenüber der Amplitude A der Ausgangssignale U1_{NOM}, U2_{NOM} im Normalbetrieb NOM halbiert. Somit kann im Notstrombetrieb BOM nicht die volle Leistung an die ausgewählten Verbraucher 4' geliefert werden, sondern höchstens die Hälfte der maximal einspeisbaren Leistung im Normalbetrieb.

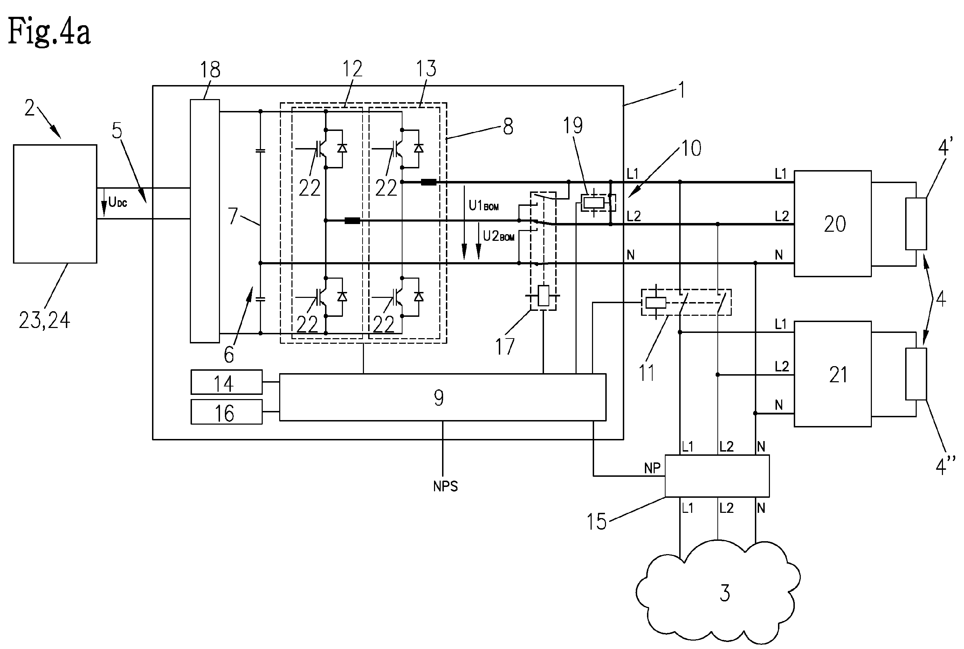

In Fig. 4a ist der Wechselrichter 1 gemäß Fig. 2a in einer zweiten Variante des Notstrombetriebs BOM dargestellt. Gegenüber dem Normalbetrieb NOM gemäß Fig. 2a ist der AC-Trenner 11 und Relais 17 identisch der ersten Variante des Notstrombetriebs BOM angesteuert worden. Das Einphasen-Dreileiternetz 3 und das Hauptanschlusspaneel 21 sind daher vom Wechselrichter 1 getrennt und die ausgewählten Verbraucher 4' über das Notstromanschlusspaneel 20 mit dem AC-Ausgang 10 des Wechselrichters 1 verbunden. Unterschiedlich von der ersten Variante der Notstrombetriebs BOM wird hier beim Ausgangssignal U2_{BOM} der zweiten Halbbrücke 13 keine Phasenvierschiebung durchgeführt, die Halbierung der Amplitude der Ausgangssignale U1_{BOM}, U2_{BOM} findet jedoch auch in dieser Variante nach Fig. 4a statt. Allerdings ist gegenüber der ersten Variante gemäß Fig. 3a ein als Relais 19 ausgeführter Schalter vorgesehen der die beiden Außenleiter L1, L2 im Notstrombetrieb BOM miteinander verbindet. Gemäß Figur 4a ist dieses Relais 19 im Wechselrichter 1 angeordnet, aber die Verbindung der Außenleiter L1, L2 außerhalb des Wechselrichters 1 über einen nicht näher dargestellten Schalter ist ebenso möglich. Die Verbindung der Außenleiter L1, L2 bewirkt eine Parallelschaltung der auf die Außenleitern L1, L2 einspeisenden Halbbrücken 12, 13, wodurch eine gleichmäßige Stromaufteilung erreicht wird. Diese gleichmäßige Stromaufteilung auf die Halbbrücken 12, 13 erlaubt den Wechselrichter 1 bis zum maximalen Strom aller Halbbrücken 12, 13 zu belasten. Eine höhere Anzahl an Verbrauchern 4' oder Verbraucher 4' mit erhöhtem Leistungsbedarf können so im Notstrombetrieb BOM versorgt werden.

Auch wenn sich der gleichzeitige Betrieb des Wechselrichters 1 nach Fig. 3a und Fig. 4a ausschließt, können dennoch beide Varianten des Notstrombetriebs BOM in einem Wechselrichter implementiert sein. Aufgrund der angeschlossenen Verbraucher kann dann die vorteilhaftere Variante für den Notstrombetrieb BOM ausgewählt werden. Dies kann sowohl manuell durch den Benutzer als auch automatisch, beispielsweise aufgrund des Leistungsbedarfs erfolgen.

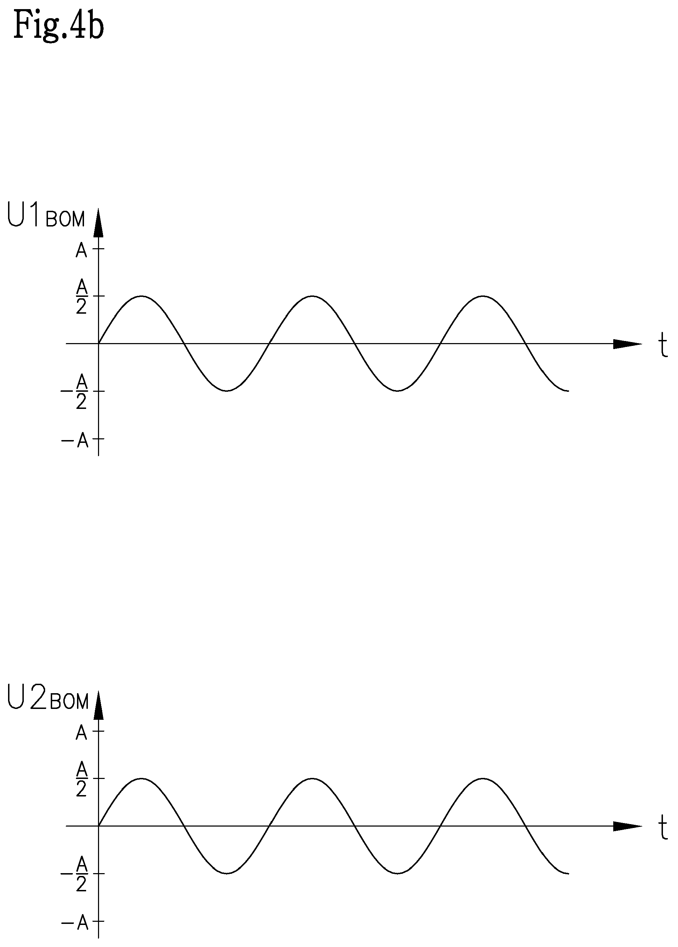

Fig. 4b zeigt die zeitlichen Verläufe der Ausgangsspannungen U1_{BOM}, U2_{BOM} der Halbbrücken 12, 13 des DC/AC-Wandlers 8 des Wechselrichters 1 in der zweiten Variante des Notstrombetriebs BOM nach Fig. 4a. Das obere Diagramm zeigt die Ausgangsspannung U1_{BOM} der ersten Halbbrücke 12 in Abhängigkeit der Zeit t, welche zwischen der Außenleiter L1 bzw. damit verbundenen Außenleiter L2 und dem Neutralleiter N, der mit dem Zwischenkreismittelpunkt 7 verbunden ist, eingespeist wird. Das Ausgangssignal U2_{BOM} wird gleichfalls zwischen Außenleiter L1 bzw. damit verbundenen Außenleiter L2 und dem Neutralleiter N eingespeist und ist daher zu U1_{BOM} identisch. Die Amplituden A/2 der Ausgangssignale U1_{BOM}, U2_{BOM} sind gegenüber den Amplituden A der Ausgangssignale U1_{NOM}, U2_{NOM} im Normalbetrieb NOM halbiert. Somit kann im Notstrombetrieb BOM nicht die volle Leistung an die ausgewählten Verbraucher 4' geliefert werden, sondern nur die Hälfte der maximal einspeisbaren Leistung im Normalbetrieb.

Wie aus Figur 2a, 3a und 4a ersichtlich, ist ein Schalter 14 zum manuellen Umschalten zwischen dem Normalbetrieb NOM und dem Notstrombetrieb BOM vorgesehen. Diese einfache Ausführungsvariante erlaubt einem Benutzer bei Erkennen des Ausfalls des Einphasen-Dreileiternetzes 3 mithilfe des mechanischen Schalters 14, den Wechselrichter 1 manuell in den Notstrombetrieb BOM umzuschalten. Ausgewählter Verbraucher 4' werden so im Notstrombetrieb BOM weiterhin mit Energie versorgt. Anstelle oder parallel zum mechanischen Schalter 14 ist die Umschaltung in den Notstrombetrieb BOM auch mittels eines externen Signals durchführbar. So kann beispielsweise ein EVU die Abtrennung der Wechselrichter 1 vom Einphasen-Dreileiternetz 3 bewirken, um die Netzstabilität aufrecht zu erhalten.

Die Messeinrichtung 15 ist zur Erfassung von Netzparametern NP des Einphasen-Dreileiternetzes 3 vorgesehen und mit der Steuereinrichtung 9 verbunden. Bei Abweichung der Netzparametern NP des Einphasen-Dreileiternetzes 3 um einen vorgegebenen Wert NPS wird dies an der Anzeige 16 angezeigt. Die Anzeige 16 kann dabei sowohl optisch, akustisch oder auch mechanisch, beispielsweise über entsprechende Vibrationen, erfolgen. So wird dem Benutzer der Ausfall des Einphasen-Dreileiternetzes 3 zur Kenntnis gebracht, worauf der Benutzer den Wechselrichter 1 in den Notstrombetrieb BOM umschalten kann.

Mithilfe der erfassten Netzparametern NP der Messeinrichtung 15 kann die Steuereinrichtung 9 auch automatisch in dem Notstrombetrieb BOM im Falle der Abweichung zumindest eines Netzparameters NP des Einphasen-Dreileiternetzes 3 um den vorgegebenen Wert NPS umschalten. Dabei können auch nationale Richtlinien und Vorschriften berücksichtigt werden, die das Wegschalten des Wechselrichters 1 vom Einphasen-Dreileiternetz 3 erst nach einer bestimmten Zeitspanne gestatten. Somit kann auch ohne Zutun des Benutzers eine Umschaltung in den Notstrombetrieb BOM erfolgen und eine Versorgung zumindest einiger ausgewählter Verbraucher 4' bei Ausfall des Einphasen-Dreileiternetzes 3 ist gewährleistet.

## Patentansprüche

1. Wechselrichter (1) zur Umwandlung einer Gleichspannung (U_{DC}) einer Gleichspannungsquelle (2) in eine Wechselspannung (U_{AC}) zur Einspeisung in ein Einphasen-Dreileiternetz (3) und zum Versorgen von Verbrauchern (4), mit einem DC-Eingang (5) zur Verbindung mit der Gleichspannungsquelle (2), einem Zwischenkreis (6) mit einem Zwischenkreismittelpunkt (7), einem DC/AC-Wandler (8), einer Steuereinrichtung (9) und einem AC-Ausgang (10) mit zwei oder mehr Außenleitern (L1, L2) und einem Neutralleiter (N) zur Verbindung mit dem Einphasen-Dreileiternetz (3) und den Verbrauchern (4), wobei der DC/AC-Wandler (8) zumindest zwei Halbbrücken (12, 13) aufweist, welche Halbbrücken (12, 13) in einem Normalbetrieb (NOM) ausgangsseitig parallel geschaltet und mit einem der Außenleiter (L1, L2) des AC-Ausgangs (10) verbunden sind und der Zwischenkreismittelpunkt (7) mit einem der anderen Außenleitern (L1, L2) des AC-Ausgangs (10) verbunden ist, **dadurch gekennzeichnet, dass** die Steuereinrichtung (9) dazu ausgebildet ist, in einem Notstrombetrieb (BOM) eine Halbbrücke (12) des DC/AC-Wandlers (8) mit einem Außenleiter (L1) des AC-Ausgangs (10), die andere Halbbrücke (13) des DC/AC-Wandlers (8) mit einem anderen Außenleiter (L2) des AC-Ausgangs (10) und den Zwischenkreismittelpunkt (7) mit dem Neutralleiter (N) des AC-Ausgangs (10) zu verbinden und die Amplitude des Ausgangssignals (U1_{BOM}, U2_{BOM}) der Halbbrücken (12, 13) zu halbieren, sodass zumindest einige Verbraucher (4) auch im Notstrombetrieb (BOM) versorgbar sind.

2. Wechselrichter (1) nach Anspruch 1, **dadurch gekennzeichnet, dass** die Steuereinrichtung (9) dazu ausgebildet ist, in dem Notstrombetrieb (BOM) eine Phasenverschiebung des Ausgangssignals (U1_{BOM} oder U2_{BOM}) einer Halbbrücke (12 oder 13) um 180° durchzuführen.

3. Wechselrichter (1) nach Anspruch 1 oder 2, **dadurch gekennzeichnet, dass** die Steuereinrichtung (9) dazu ausgebildet ist, in dem Notstrombetrieb (BOM) zumindest zwei der Außenleiter (L1, L2) des AC-Ausgangs (10) miteinander zu verbinden.

4. Wechselrichter (1) nach einem der Ansprüche 1 bis 3 **dadurch gekennzeichnet, dass** ein AC-Trenner (11) vorgesehen ist, welcher zwischen ausgewählten Verbrauchern (4') und übrigen Verbrauchern (4") angeordnet ist, und die Steuereinrichtung (9) dazu ausgebildet ist, den AC-Trenner (11) anzusteuern, sodass im Notstrombetrieb (BOM) der AC-Ausgang (10) mit den ausgewählten Verbrauchern (4') verbunden ist, während die Verbindung mit den übrigen Verbrauchern (4") und dem Einphasen-Dreileiternetz (3) aufgetrennt ist.

5. Wechselrichter (1) nach einem der Ansprüche 1 bis 4, **dadurch gekennzeichnet, dass** ein Schalter (14) zum manuellen Umschalten zwischen dem Normalbetrieb (NOM) und dem Notstrombetrieb (BOM) vorgesehen ist.

6. Wechselrichter (1) nach einem der Ansprüche 1 bis 5, **dadurch gekennzeichnet, dass** eine Messeinrichtung (15) zur Erfassung von Netzparametern (NP) des Einphasen-Dreileiternetzes (3) vorgesehen ist, welche mit der Steuereinrichtung (9) verbunden ist, sodass die Abweichung eines Netzparameters (NP) des Einphasen-Dreileiternetzes (3) von einem vorgegebenen Wert (NPS) an einer Anzeige (16) anzeigbar ist.

7. Wechselrichter (1) nach Anspruch 6, **dadurch gekennzeichnet, dass** die Steuereinrichtung (9) zur automatischen Umschaltung in den Notstrombetrieb (BOM) im Falle der Abweichung eines Netzparameters (NP) des Einphasen-Dreileiternetzes (3) von einem vorgegebenen Wert (NPS) ausgebildet ist.

8. Wechselrichter (1) nach einem der Ansprüche 1 bis 7, **dadurch gekennzeichnet, dass** zur Umschaltung der Halbbrücken (12, 13) zwischen dem Normalbetrieb (NOM) und dem Notstrombetrieb (BOM) zumindest ein Relais (17) vorgesehen ist, welches mit der Steuereinrichtung (9) verbunden ist.

9. Verfahren zum Betreiben eines Wechselrichters (1) zur Umwandlung einer Gleichspannung (U_{DC}) einer Gleichspannungsquelle (2) in eine Wechselspannung (U_{AC}) zur Einspeisung in ein Einphasen-Einphasen-Dreileiternetz (3) und zum Versorgen von Verbrauchern (4), mit einem DC-Eingang (5) zur Verbindung mit der Gleichspannungsquelle (2), einem Zwischenkreis (6) mit einem Zwischenkreismittelpunkt (7), einem DC/AC-Wandler (8), einer Steuereinrichtung (9) und einem AC-Ausgang (10) mit zwei oder mehr Außenleitern (L1, L2) und einem Neutralleiter (N) zur Verbindung mit dem Einphasen-Dreileiternetz (3) und den Verbrauchern (4), wobei der DC/AC-Wandler (8) zumindest zwei Halbbrücken (12, 13) aufweist, welche Halbbrücken (12, 13) in einem Normalbetrieb (NOM) ausgangsseitig parallel geschaltet und mit einem der Außenleiter (L1, L2) des AC-Ausgangs (10) verbunden werden und der Zwischenkreismittelpunkt (7) mit einem anderen Außenleiter (L1, L2) verbunden wird, **dadurch gekennzeichnet, dass** durch die Steuereinrichtung (9) in einem Notstrombetrieb (BOM) eine Halbbrücke (12) des DC/AC-Wandlers (8) mit einem Außenleiter (L1) des AC-Ausgangs (10) und die andere Halbbrücke (13) des DC/AC-Wandlers (8) mit einem anderen Außenleiter (L2) des AC-Ausgangs (10) und der Zwischenkreismittelpunkt (7) mit dem Neutralleiter (N) des AC-Ausgangs (10) verbunden wird, und die Amplitude des Ausgangssignals (U1_{BOM}, U2_{BOM}) der Halbbrücken (12, 13) halbiert wird, sodass zumindest einige Verbraucher (4) auch im Notstrombetrieb (BOM) versorgt werden.

10. Verfahren nach Anspruch 9, **dadurch gekennzeichnet, dass** durch die Steuereinrichtung (9) in dem Notstrombetrieb (BOM) eine Phasenverschiebung des Ausgangssignals (U1_{BOM} oder U2_{BOM}) einer Halbbrücke (12 oder 13) um 180° durchgeführt wird.

11. Verfahren nach Anspruch 9, **dadurch gekennzeichnet, dass** durch die Steuereinrichtung (9) in dem Notstrombetrieb (BOM) zumindest zwei der Außenleiter (L1, L2) des AC-Ausgangs (10) miteinander verbunden werden.

12. Verfahren nach einem der Ansprüche 9 bis 11 **dadurch gekennzeichnet, dass** ein AC-Trenner (11) zwischen ausgewählten Verbrauchern (4') und übrigen Verbrauchern (4") angeordnet wird, und der AC-Trenner (11) durch die Steuereinrichtung (9) so angesteuert wird, dass im Notstrombetrieb (BOM) der AC-Ausgang (10) mit den ausgewählten Verbrauchern (4') verbunden wird, während die Verbindung mit den übrigen Verbrauchern (4") und dem Einphasen-Dreileiternetz (3) aufgetrennt wird.

13. Verfahren nach einem der Ansprüche 9 bis 12, **dadurch gekennzeichnet, dass** die Halbbrücken (12, 13) des DC/AC-Wandlers (8) und allenfalls der AC-Trenner (11) manuell mit einem Schalter (14) in den Notstrombetrieb (BOM) umgeschaltet werden.

14. Verfahren nach einem der Ansprüche 9 bis 13, **dadurch gekennzeichnet, dass** Netzparameter (NP) des Einphasen-Dreileiternetzes (3) erfasst werden, und die Abweichung eines Netzparameters (NP) des Einphasen-Dreileiternetzes (3) von einem vorgegebenen Wert (NPS) angezeigt wird.

15. Verfahren nach Anspruch 14, **dadurch gekennzeichnet, dass** im Falle der Abweichung eines Netzparameters (NP) des Einphasen-Dreileiternetzes (3) von dem vorgegebenen Wert (NPS) die Steuereinrichtung (9) zum automatischen Umschalten in den Notstrombetrieb (BOM) veranlasst wird.

16. Verfahren nach einem der Ansprüche 9 bis 15, **dadurch gekennzeichnet, dass** die Halbbrücken (12, 13) zwischen dem Normalbetrieb (NOM) und dem Notstrombetrieb (BOM) über mit der Steuereinrichtung (9) verbundene Relais (17) umgeschaltet werden.
